# EUROPEAN PATENT SPECIFICATION

(11) **EP 2 712 711 B1**
(45) Date of publication and mention of the grant of the patent: **10.08.2022**
(21) Application number: 13184853.3
(22) Date of filing: 17.09.2013
(51) Int. Cl.: B25F 5/00, B25F 5/02

(54) **Power tools**
Elektrowerkzeuge
Outils électriques

(30) Priority: 26.09.2012 JP 2012212334; 16.07.2013 JP 2013147543
(43) Date of publication of application: 02.04.2014
(73) Proprietor: Makita Corporation, Anjo-shi, Aichi 446-8502 (JP)
(72) Inventor: Naito, Tsutomu, Anjo-shi, Aichi 446-8502 (JP); Inayoshi, Hirotomo, Anjo-shi, Aichi 446-8502 (JP)
(74) Representative: Kramer Barske Schmidtchen Patentanwälte PartG mbB

(56) References cited:
- EP-A1- 0 591 875
- EP-A2- 2 338 645
- CN-A- 101 403 425
- DE-A1- 19 649 514
- DE-U1-202012 003 535
- GB-A- 2 331 268
- GB-A- 2 413 300
- JP-A- 2008 271 791
- US-A- 2 839 343
- US-A- 4 379 417
- US-A1- 2009 071 017
- US-A1- 2009 308 213
- US-A1- 2010 192 389
- US-A1- 2011 167 651

## Description

Embodiments of the present invention relate to power tools, such as cutting tools and drilling tools.

US 2009/0071017 A1 discloses a saw with an increased depth of cut. GB 2 331 268 A discloses a rotary cutting device. DE 20 2012 003 535 U1 discloses a small power tool. EP 2 338 645 A2 discloses a power tool. The preamble of claim 1 is known from US2011/167651A1.

Japanese Laid-Open Patent Publication Nos. 2010-201598, 2008-18498 and 61-8289 disclose techniques relating to a power tool that uses a battery pack as the power source. In these publications, the power tool is a cutting tool called a portable circular saw that includes a base for contacting with the upper surface of a workpiece, and a tool main body supported on the upper side of the base. The tool main body may include a circular saw blade, an electric motor for rotating the saw blade, and a handle portion that can be grasped by the user for moving the portable circular saw. As disclosed in the above-mentioned publications, the battery pack may be repeatedly used by being recharged by a charger separately prepared. In general, this kind of power tool may be held by hand while being used. Therefore, various improvements have been made for this type of power tool for securing visibility of the workpiece to be machined, securing operability during the machining operation, and configuring the size to be small.

In the case of the power tools of the above publications, the circular saw blade is mounted to a rotational shaft that may be rotatably supported by two bearings. In order to minimize the displacement of the rotational shaft, the bearings may be positioned at positions nearer to the opposite ends. The precision in the rotational support by the bearings is important to improve the machining precision by the saw blade. In order to improve the rotational support precision, it may be considered to increase the size of the bearings. However, this may lead to increase the size of the power tool in some cases.

Therefore, there has been a need in the art for improving the precision in the rotational support of the rotational shaft without accompanying an increase in size of the power tool.

The above mentioned object is solved by a power tool according to claim 1. In one aspect according to the present teachings, a power tool may include a rotational force generating device and a rotational driven shaft coupled to a rotational drive shaft of the rotational force generating device via a transmission mechanism, so that the rotation of the rotational drive shaft is transmitted to the rotational driven shaft via the transmission mechanism. According to claim 1, the rotational driven shaft is rotatably supported by at least three bearings.

### BRIEF DESCRIPTION OF THE DRAWINGS

Additional objects, features, and advantages, of the present teachings will be readily understood after reading the following detailed description together with the claims and the accompanying drawings, in which:
Fig. 1 is a perspective view, as seen obliquely from the right rear side, of a cutting tool according to a reference embodiment;
Fig. 2 is a perspective view of a battery pack;
Fig. 3 is a plan view of the cutting tool;
Fig. 4 is a perspective view, as seen obliquely from the left front side, of the cutting tool;
Fig. 5 is a rear view of the cutting tool, with the battery pack mounted thereto;
Fig. 6 is a rear view of the cutting tool, with the battery pack removed therefrom;
Fig. 7 is a side view, as seen from the right side, of a cutting tool according to a first embodiment;
Fig. 8 is a side view of the cutting tool of Fig. 7 as seen from the left side;
Fig. 9 is a plan view of the cutting tool of Fig. 7;
Fig. 10 is a sectional view taken along arrow line X-X of Fig. 7, illustrating the internal structure of the cutting tool of Fig. 9;
Fig. 11 is a sectional view, taken along line XI-XI of Fig. 7, of the cutting tool;
Fig. 12 is a sectional view, taken along line XII-XII of Fig. 7, of the cutting tool;
Fig. 13 is a sectional view, taken along line XIII-XIII of Fig. 9, of the cutting tool;
Fig. 14 is a sectional view, taken along line XIV-XIV of Fig. 9, of the cutting tool;
Fig. 15 is a schematic view, with a part broken away for showing the internal structure, of a cutting tool according to a second embodiment; and
Fig. 16 is a schematic view showing an arrangement of bearings for supporting an output shaft of a cutting tool according to a third embodiment.

Each of the additional features and teachings disclosed above and below may be utilized separately or in conjunction with other features and teachings to provide improved power tools. Representative examples of the present invention, which examples utilize many of these additional features and teachings both separately and in conjunction with one another, will now be described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the following detailed description may not be necessary to practice the invention in the broadest sense, and are instead taught merely to particularly describe representative examples of the invention. Moreover, various features of the representative examples and the dependent claims may be combined in ways that are not specifically enumerated in order to provide additional useful examples of the present teachings.

In one embodiment, a power tool may include a rotational force generating device having a rotational drive shaft, and a rotational driven shaft coupled to the rotational drive shaft via a transmission mechanism, so that the rotation of the rotational drive shaft is transmitted to the rotational driven shaft via the transmission mechanism. The rotation driven shaft may be a separate member from the rotational drive shaft. One or each of the rotational drive shaft and the rotational driven shaft is rotatably supported by at least three bearings.

With this arrangement, because the one or each of the rotational drive shaft and the rotational driven shaft can by reliably supported by the at least three bearings, it is possible to improve the precision in the rotational support of the rotational drive shaft and/or the rotational driven shaft without accompanying an increase in size of each bearing and eventually without accompanying an increase in size of the power tool.

The at least three bearings may include a needle bearing that supports an end portion of the one or each of the rotational drive shaft and the rotational driven shaft. With use of the needle bearing, it is possible to minimize the size of the space in the radial direction occupied by the bearing.

The power tool may further include a machining tool for machining a workpiece. The machining tool may be mounted to a mount portion of one or each of the rotational drive shaft and the rotational driven shaft. Two of the at least three bearings may be arranged side by side at a position on the side of the mount portion. With this arrangement, it is possible to improve the precision in the rotational support of the rotational drive shaft and/or the rotational driven shaft primarily on the side where the machining tool is mounted.

The transmission mechanism may be configured to reduce a rotational speed of the rotational drive shaft in two stages.

In another embodiment, a power tool may include a tool main body having a battery mounting portion and a handle portion. The battery mounting portion may be configured to be able to mount a battery pack. The handle portion may be configured to be grasped by a user. The power tool may further include an electric motor configured to rotate with a supply of an electric power from the battery pack, and an output shaft rotatably driven by the electric motor and configured to be able to mount a machining tool for machining a workpiece. A first bearing may rotatably support a first end portion of the output shaft, to which the machining tool is mounted. A second bearing may rotatably support a second end portion opposite to the first end portion of the output shaft. The first bearing may contact the first end portion of the output shaft along a first length for supporting the first end portion. The second bearing may contact the second end portion of the output shaft along a second length for supporting the second end portion. The first length may be longer than the second length.

By determining the first length to be longer than the second length, it is possible to improve the precision in the rotational support of the output shaft primarily for the first end portion where the machining tool is mounted.

### [Reference Embodiment]

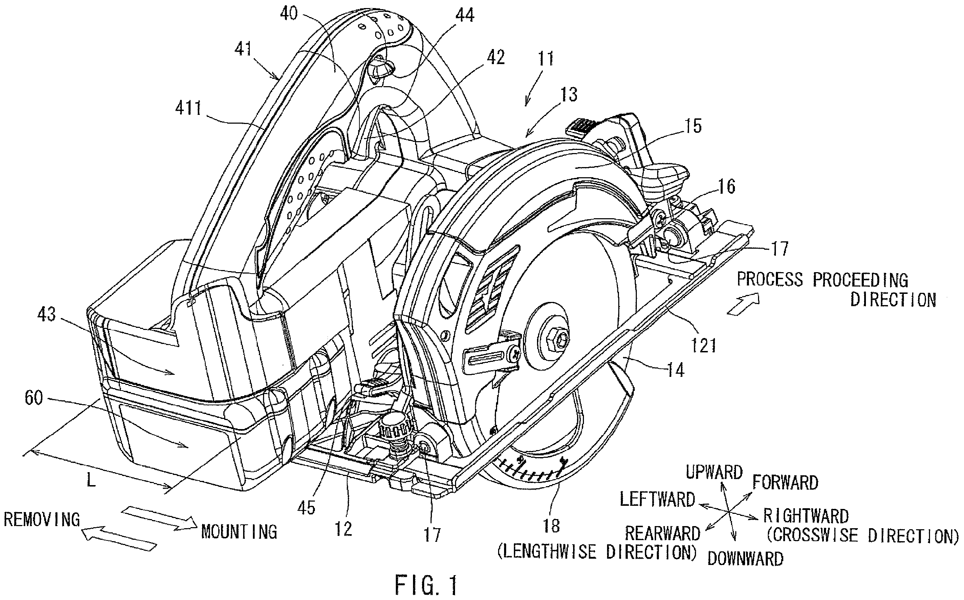

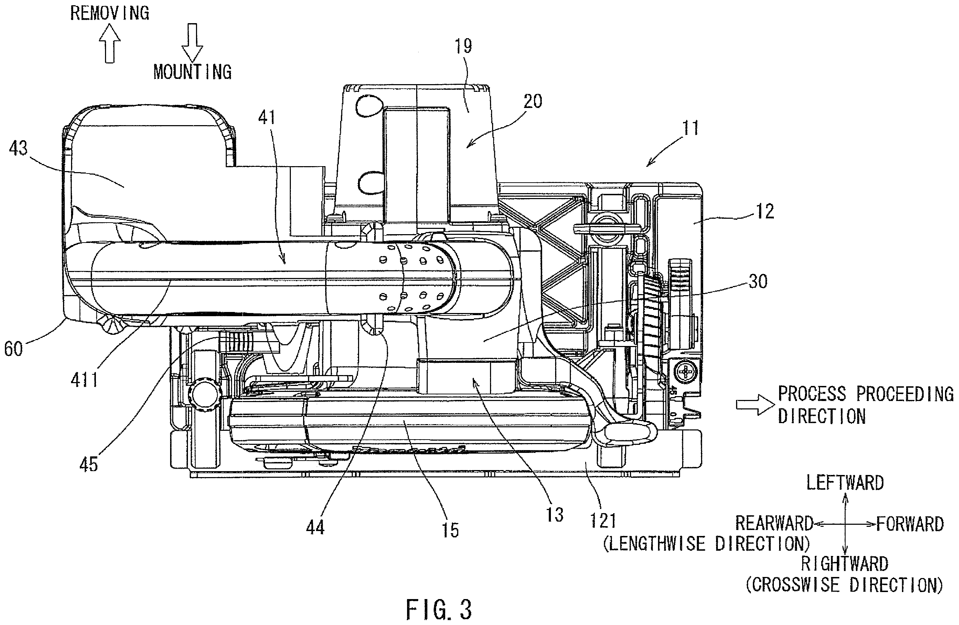

Before the explanation of first to third embodiments, a reference embodiment will be described with reference to Figs. 1 through 6. Except for the specific features of the first embodiment that will be described later, the features of the reference embodiment described below may be generally incorporated into the first embodiment. In this reference embodiment, a cutting tool 11 will be described as an example of a power tool. The cutting tool 11 is configured as a so-called portable circular saw that is an example of a cutting tool. This cutting tool 11 may be provided with a rectangular base 12 for contacting with the upper surface of a workpiece (not shown), and a tool main body 13 supported on the upper side of the base 12. A sub base 121 may be detachably mounted to the right side portion of the base 12. The sub base 121 may be detached for performing a so-called "edge-cutting." In describing the cutting tool 11 according to the reference embodiment, the side toward which the machining operation by the cutting tool 11 proceeds will be referred to as the front side.

The tool main body 13 may include a blade case 15 that covers substantially the upper half of a circular saw blade 14. An electric motor 21 serving as a rotational force generating device may be mounted to the rear side (the left side) of the blade case 15 via a speed reduction gear section 30. The saw blade 14 serves as a machining tool in this embodiment.

The lower portion of the saw blade 14 may protrude downwardly from the base 12. This protruding portion may cut into the workpiece for cutting the workpiece. The lower portion of the saw blade 14 may be covered with a movable cover 18. The movable cover 18 may be rotatably supported by the blade case 15.

The tool main body 13 may be supported so as to be vertically tiltable relative to the base 12 via a vertical tilting support shaft 16 that is rotatably supported by the front portion of the upper surface of the base 12. By adjusting the vertical tilting position of the tool main body 13, it is possible to adjust the protruding distance of the saw blade 14 from the lower surface of the base 12, i.e., the cutting depth of the saw blade 14 into the workpiece. On the backside of the blade case 15 and on the rear side of the speed reduction gear section 30, a cutting depth fixing lever 45 may be provided for fixing the vertical tilting position of the tool main body 13.

Further, the tool main body 13 may be supported so as to be tiltable in the left and right direction relative to the base 12 via horizontal tilting support shafts 17 that are rotatably supported by the upper surface of the base 12 and have the same axis.

The tool main body 13 may be provided with a handle portion 41 that can be grasped by the user. The handle portion 41 extends rearwards in a chevron-shape from the upper portion of the speed reduction gear section 30. The handle portion 41 may have a two-part structure and may include right and left pieces that are joined together at a joint plane 411. The handle portion 41 may include a handle housing 40 having a hollow structure.

A trigger type switch lever 42 may be provided on the lower surface of the handle portion 41. The switch lever 42 can be pulled by a fingertip of the grasping hand of the user. When the switch lever 42 is pulled, the electric motor 21 starts to rotate the saw blade 14. Above the switch lever 42 and on the right and left sides of the handle portion 41, there are provided lock-off levers 44 for locking the switch lever 42 at the OFF position.

At the rear portion of the handle portion 41, there is provided a battery mounting portion 43 for mounting a battery pack 60 serving as the power source of the cutting tool 11. The battery pack 60 can be mounted and removed as it is slide in the left and right direction (the lateral direction) relative to the battery mounting portion 43.

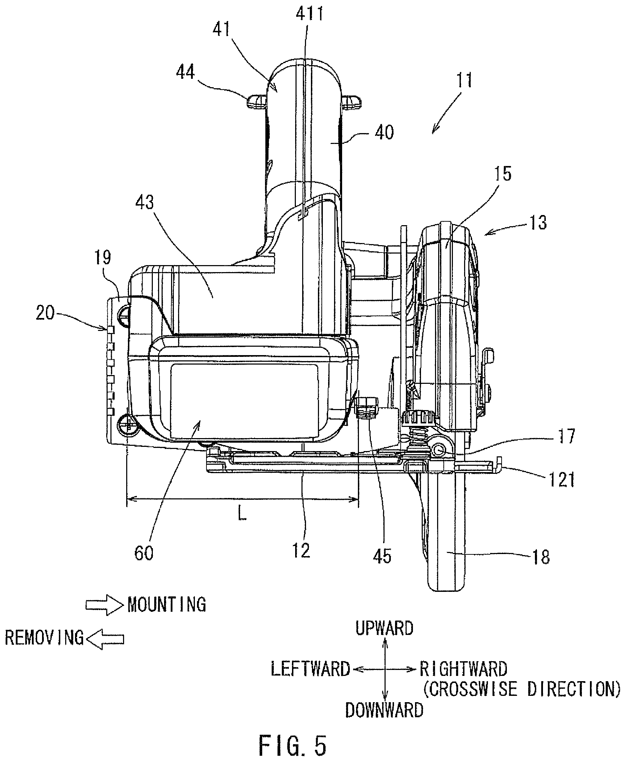

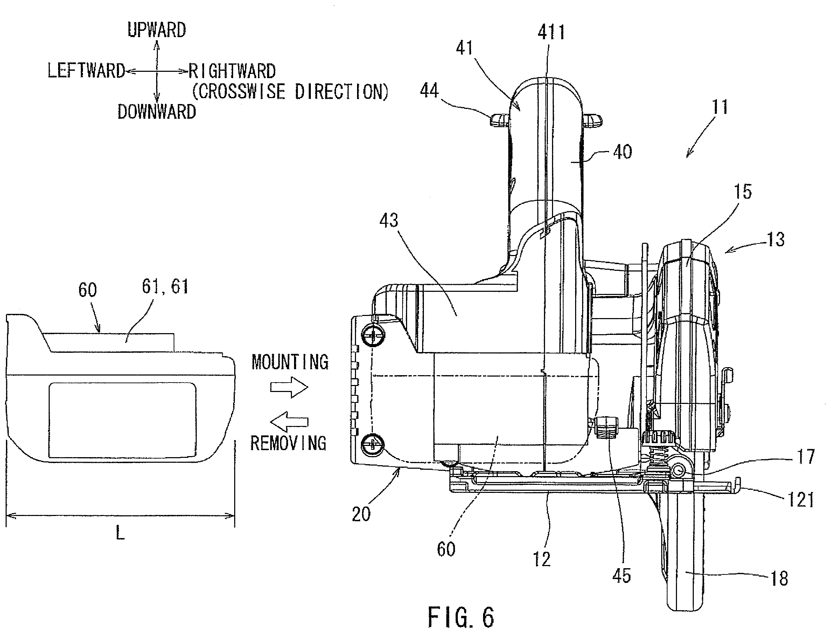

In the case of the present embodiment, the battery pack 60 may be mounted to the battery mounting portion 43 as the battery pack 60 is slid to the right relative to the battery mounting portion 43 as shown in Fig. 5. The battery pack 60 may be removed from the battery mounting portion 43 as it is slid to the left relative to the battery mounting portion 43 as shown in Fig. 6.

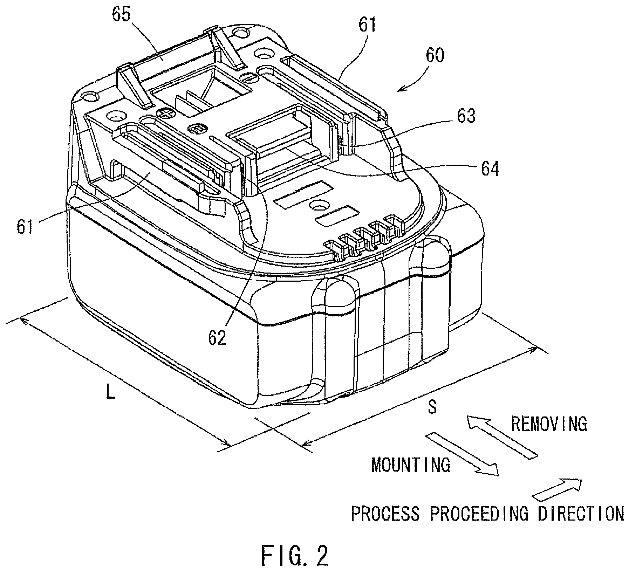

The battery pack 60 may be a lithium ion battery having an output voltage of 14.4 V and may include a plurality of cells stored in a battery case. The battery pack 60 may be repeatedly used as the power source by being recharged by a separately prepared charger. As shown in Fig. 2, the battery pack 60 may have a substantially rectangular parallelepiped shape with a longer side dimension L and a shorter side dimension S in plan view. The direction along which the longer side extends will be called a "longer side direction", and the direction along which the shorter side extends will be called a "shorter side direction." In the following description, the longer side direction and the shorter side direction will also be referred to as a "longer side direction L" and a "shorter side direction S", respectively, of the battery pack 60 for distinction in orientation.

A pair of slide rails 61 may be provided on the upper surface of the battery pack 60. The slide rails 61 may extend in the longer side direction L so as to be parallel to each other. The battery pack 60 may be slid relative to the battery mounting portion 43 via the slide rails 61 for mounting and removing the battery pack 60.

Thus, the longer side direction L of the battery pack 60 is the direction in which the battery pack 60 is mounted to and removed from the battery mounting portion 43 (slide direction). This mounting and removing direction is the left and right direction (lateral direction) that is perpendicular to the machining proceeding direction and the joint plane 411 of the two-piece structure of the handle portion 41 and is also perpendicular to the left and right direction as seen from the user who operates the cutting tool 11. Thus, in the state in which the battery pack 60 is mounted to the battery mounting portion 43, the shorter side direction S of the battery pack 60 is parallel to the direction in which the handle portion 41 extends, and is also parallel to the forward and rearward direction of the cutting tool 11.

Between the two slide rails 61, there may be provided a positive terminal 62, a negative terminal 63, and a connection portion 64. The positive and negative terminals 62 and 63 may be connected to corresponding terminals provided on the battery mounting portion 43. The connection portion 64 may be connected to a control signal connector provided on the battery mount portion 43. When the battery pack 60 is mounted to the battery mounting portion 43 by being slid in the lateral direction (right direction), the battery pack 60 may be electrically connected to the battery mounting portion 43 via the terminals 62 and 63 and the connection portion 64.

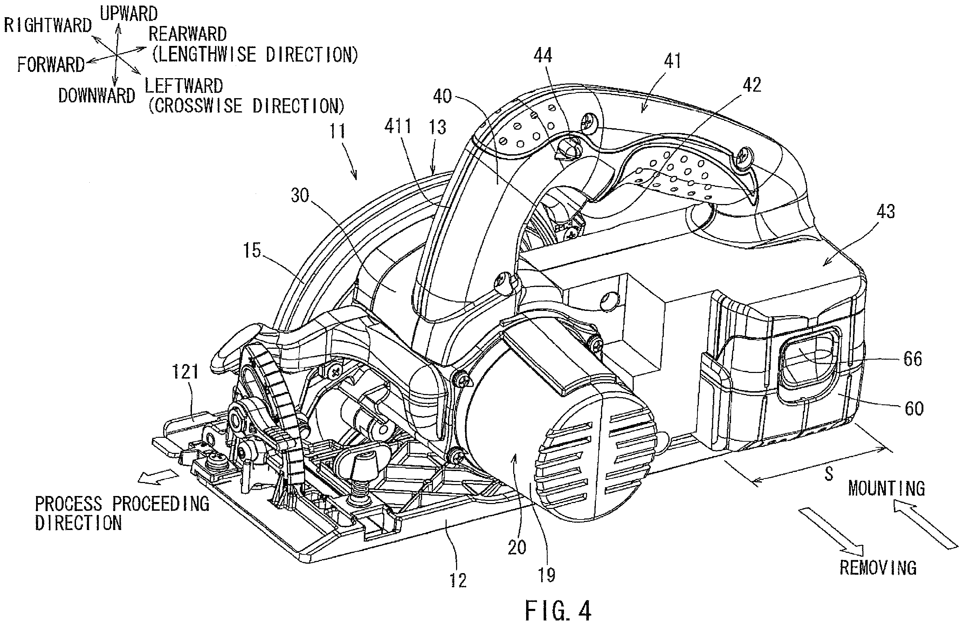

A lock claw 65 for locking the mounting state of the battery pack 60 with respect to the battery mounting portion 43 may be disposed at the end portion of the upper surface of the battery pack 60. Further, as shown in Fig. 4, on the removing-side end surface of the battery pack 60, there may be provided a removing button 66 that can be operated for downwardly moving the lock claw 65 for releasing the lock state.

With the cutting tool 11 of the reference embodiment constructed as described above, the battery pack 60 can be mounted and removed as the battery pack 60 is slid in the lateral direction (left and right direction perpendicular to the machining proceeding direction), while the battery pack 60 being oriented laterally relative to the battery mounting portion 43 provided at the rear portion of the handle portion 41 (i.e. with the longer side direction L of the battery pack 60 being oriented perpendicular to the machining proceeding direction). Therefore, in the mounted state, the shorter side direction S of the battery pack 60 is parallel to the forward and rearward direction of the cutting tool 11.

For this reason, as compared with the construction in which the battery pack is mounted longitudinally in the state that longer side direction of the battery pack is oriented in the forward and rearward direction relative to the battery mounting portion 43 and eventually relative to the rear portion of the handle portion 41, it is possible to achieve a reduction in size in the forward and rearward direction, whereby it is possible to achieve an improvement in terms of ease of handling when the user grasps the handle.

Further, due to the construction in which the battery pack 60 having a substantially rectangular parallelepiped shape is mounted laterally, with the longer side direction L thereof extending in the left and right direction, it is possible to set the center-of-gravity position thereof at a position on the front side (the side of the switch lever 42 of the handle portion 41) as compared with the construction in which the battery pack is mounted longitudinally, whereby it is possible to improve the weight balance when the user grasps the handle portion 41, which also helps to enhance the ease of handling of the cutting tool 11.

The above reference embodiment may be modified in various ways. For example, in the reference embodiment, the slide rails 61 are provided to extend along the longer side direction L of the battery pack 60, and the battery pack 60 is mounted as the battery pack 60 is slid laterally via the slide rails 61. However, the slide rails 61 may be provided to extend along the shorter side direction S, so that the battery pack 60 is laterally mounted as it is slid in the forward and rearward direction via the slide rails 61 extending in the shorter side direction S. Also in this construction, the battery pack 60 can be mounted laterally, with the shorter side direction S thereof extending along the machining proceeding direction, so that it is possible to reduce the size in the forward and rearward direction of the rear portion of the handle portion.

Further, in the reference embodiment, when the battery pack 60 is laterally oriented, the longer side direction L of the battery pack 60 is perpendicular to the machining proceeding direction, and the battery pack 60 is slid in the lateral direction that is perpendicular to the machining proceeding direction. However, the lateral orientation and the lateral sliding direction may not be restricted to be precisely perpendicular to the machining proceeding direction. Thus, the lateral orientation and/or the lateral sliding direction may be inclined with respect to the machining proceeding direction by an angle within an appropriate range.

### [First Embodiment]

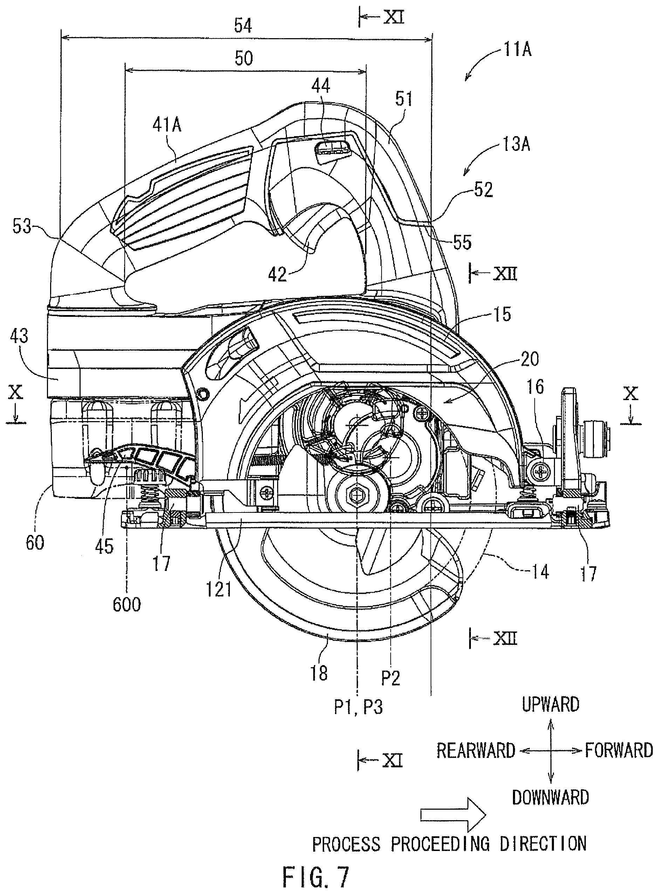

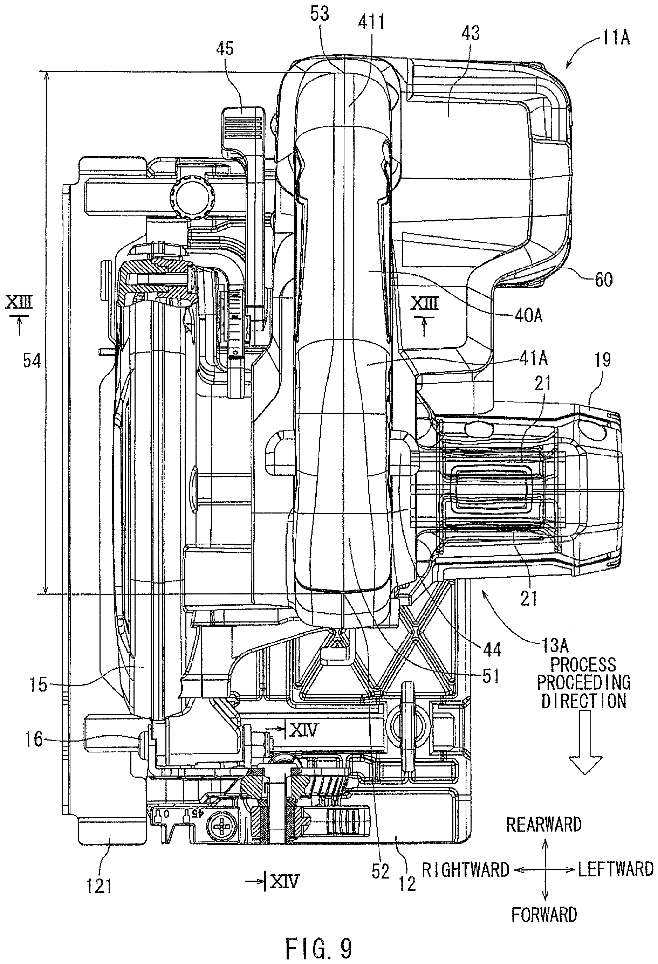

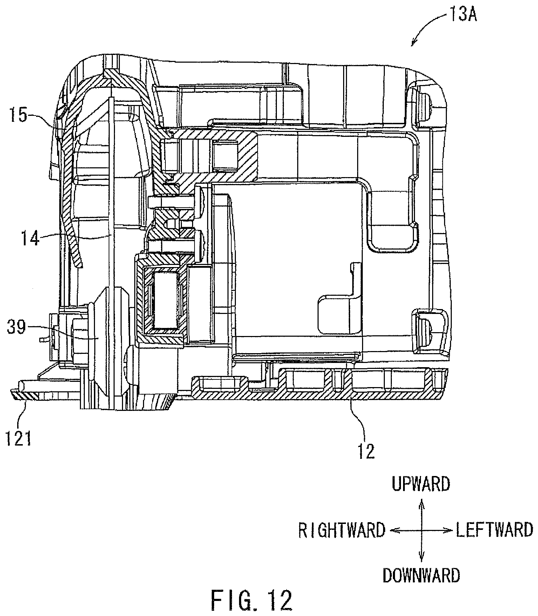

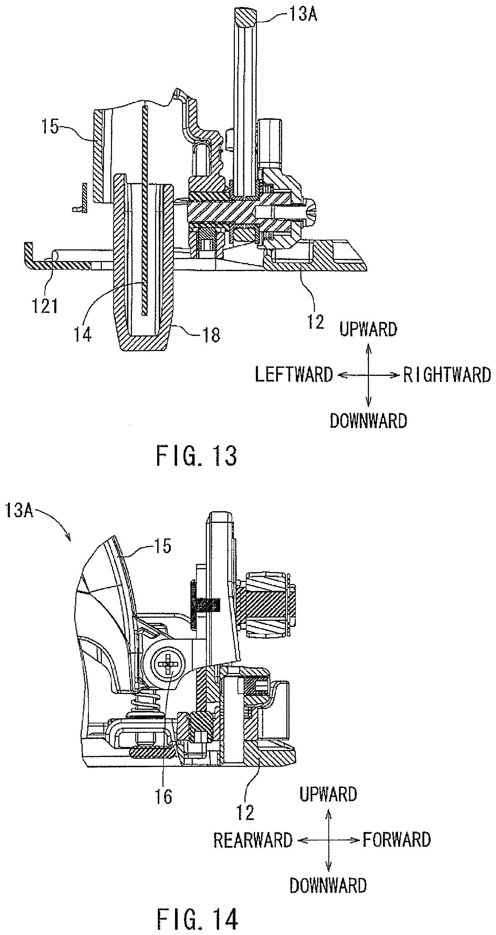

Next, a cutting tool 11A according to a first embodiment will be described with reference to Figs. 7 through 14. The cutting tool 11A according to the first embodiment is also configured as a portable circular saw substantially similar to the hand-held cutting tool (cutting machine) according to the reference embodiment. The cutting tool 11A according to the second embodiment differs from the cutting tool 11 according to the reference embodiment described above in the construction of a handle portion 41A. Thus, in the following description of the cutting tool 11A according to the first embodiment, portions similar to those of the cutting tool 11 of the reference embodiment described above are labeled the same reference numerals as used for the description of the cutting tool 11 of the reference embodiment, and a description thereof will be left out.

In addition, in the description of the cutting tool 11A according to the first embodiment, portions differing in construction from the corresponding portions of the cutting tool 11 according to the reference embodiment are labeled with the same reference numerals as used for the description of the cutting tool 11 of the reference embodiment, with the sign "A" affixed to the end of the numerals. Also in the description of the cutting tool 11A according to the first embodiment, the side toward which the machining operation by the cutting tool 11A proceeds is referred to as the front side as shown in Figs. 7 through 14.

The cutting tool 11A of the first embodiment also may have a tool main body 13A including the handle portion 41A to which the battery pack 60 can be mounted as the power source and which can be grasped by the user. As in the reference embodiment described above, the cutting tool 11A according to the first embodiment also has the base 12 which can be placed on the workpiece to be cut, and the tool main body 13A is supported on the base 12. The tool main body 13A may have a drive section 20 arranged on the upper side of the base 12. The handle portion 41A may be provided on the upper side of the drive section 20. The handle portion 41A may have a housing 40A having a hollow structure. The housing 40A may be made of synthetic resin. On the lower side of the handle portion 41A, there is provided a hand-grasping space (indicated by numeral 50) allowing grasping of the handle portion 41A by hand of the user.

As shown in Fig. 7, etc., a portion of the handle portion 41A to be touched by the user may be covered with a non-slip covering portion 51. In order to allow it to exert the slip preventing function, the non-slip covering portion 51 may be made, for example, of thermoplastic elastomer (TPE). That is, the non-slip covering portion 51 may be provided on the portion of the handle portion 41A of the cutting tool 11A where the slip preventing function is desired. The non-slip covering portion 51 made of elastomer may be integrally formed with the handle portion 41A. As shown in Fig. 7, etc., the range (indicated by numeral 54) where the non-slip covering portion 51 is provided extends between a position on the front side and a position on the rear side of the hand-grasping space (indicated by numeral 50) of the handle portion 41A. That is, a front end 52 of the non-slip covering portion 51 is positioned on the front side of the front end of the hand-grasping space (indicated by numeral 50) formed on the lower side of the handle portion 41A. Further, a rear end 53 of the non-slip covering portion 51 is positioned on the rear side of the rear end of the hand-grasping space (indicated by numeral 50). In this way, the range (indicated by numeral 54) from the front end 52 to the rear end 53 of the non-slip covering portion 51 is longer than range of the hand-grasp space (indicated by numeral 50) of the handle portion 41A. A part of the non-slip covering portion 51 on the side of the front end 52 is delimited by a cutout groove 55 that defines the outer periphery of the non-slip covering portion 51. The non-slip covering portion 51 may be made of any kind of synthetic resin as long as it can provide a slip preventing function.

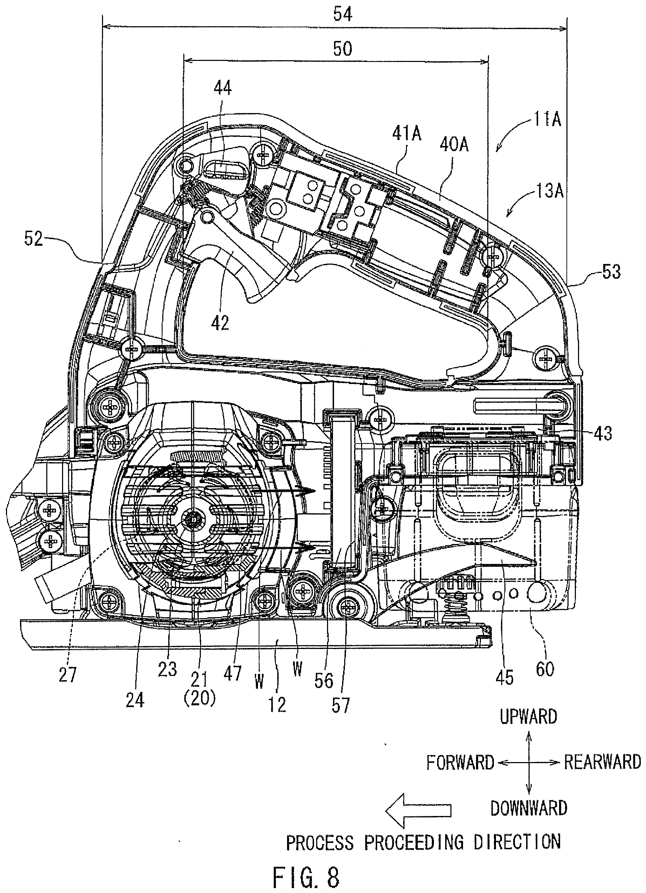

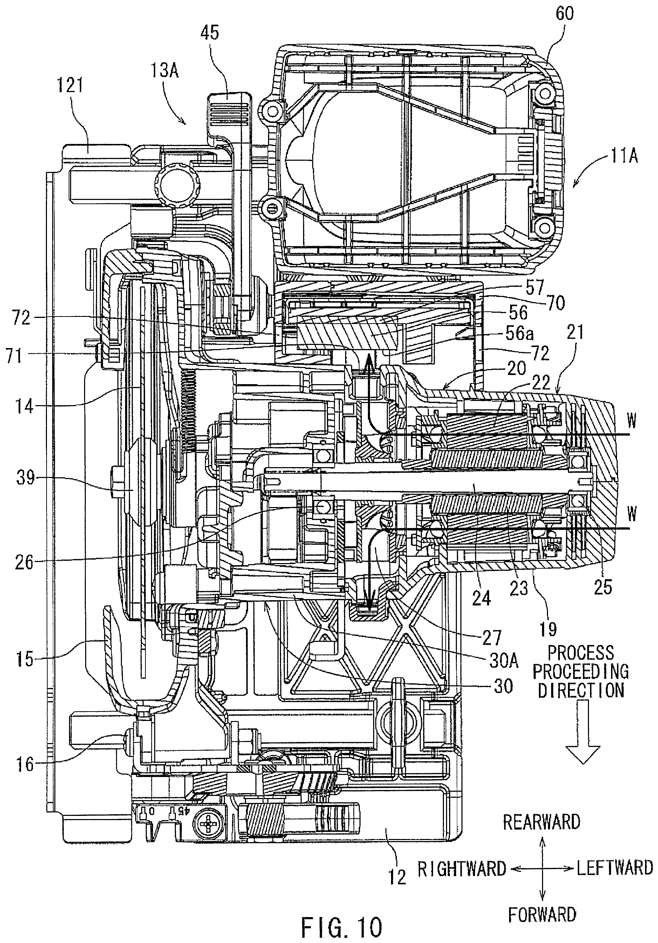

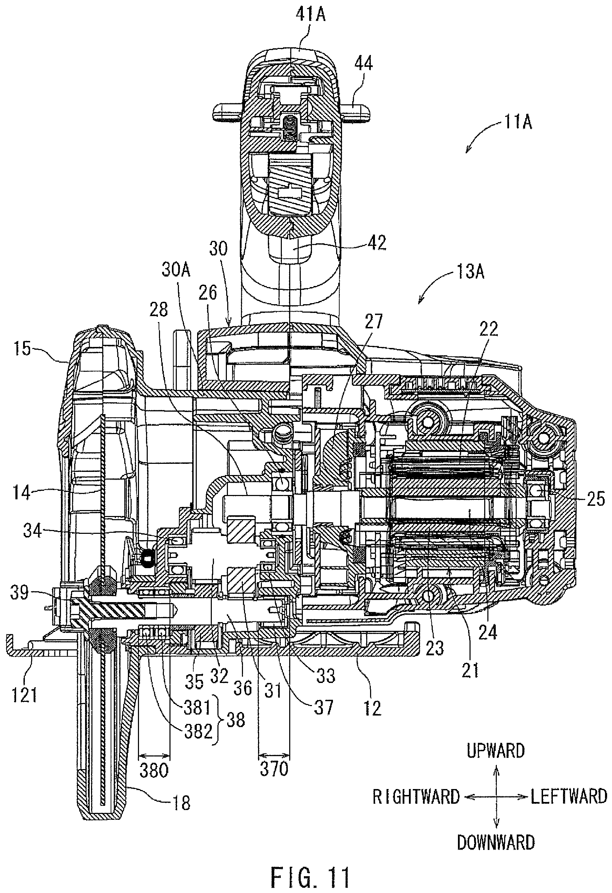

The drive section 20 may include the electric motor 21 and the speed reduction gear section 30. The electric motor 21 may be a brushless motor and may generate a rotational drive force with the supply of electric power from the battery pack 60. The electric motor 21 includes a stator 22 capable of being magnetized and a rotor 23 including permanent magnets. The stator 22 generates magnetic flux with the supply of the electric power in order to rotate the rotor 23. The rotor 23 may be integrated with a motor shaft 24 serving as a rotational shaft of the rotor 23. As described in the reference embodiment, the electric motor 21 is an example of the rotational force generating device. The motor shaft 24 serves as a rotational drive shaft of the electric motor 21. The motor shaft 24 may be rotatably supported by bearings 25 and 26 that are respectively mounted within a motor housing 19 and a gear housing 30A of the reduction gear section 30 (see Figs. 10 and 11). Both the bearings 25 and 26 may be ball bearings. A cooling fan 27 and a pinion gear 28 may be mounted to the motor shaft 24 so as to rotate together with the motor shaft 24. The pinion gear 28 may be also called a motor gear. The cooling fan 27 may be a centrifugal fan. The cooling fan 27 rotates together with the motor shaft 24 as indicated by symbol W (cooling air) in Fig. 10, whereby external air may be drawn into the tool main body 13A via intake openings 47 (see Fig. 8) and may flow toward the stator 22, which may generate heat, so as to cool it. After cooling the stator 22, the cooling air W may flow toward the blade case 15 as exhaust air. The pinion gear 28 is disposed at the right end of the motor shaft 24 and may be formed with the outer peripheral surface of the motor shaft 24. The pinion gear 28 meshes with an intermediate drive gear 31 described later for transmitting the rotational drive force generated by the electric motor 21 to the speed reduction gear section 30.

The speed reduction gear section 30 may include a row of spur gears that are disposed within the gear housing 30A and mesh with each other for reducing the speed of the rotation of the motor shaft 24 of the electric motor 21. The speed reduction gear section 30 transmits rotation of the motor shaft 24 to an output gear 36 explained later after reducing the rotational speed of the motor shaft 24. In this way, the row of spur gears serve as a transmission mechanism coupled between the motor shaft 24 and an output shaft 36. The output shaft 36 is a separate member from the motor shaft 24 and serves as a rotational driven shaft. The row of spur gears of the speed reduction gear section 30 may include the intermediate drive gear 31 in mesh with the pinion gear 28, and an output gear 35 in mesh with the intermediate drive gear 31. The intermediate drive gear 31 rotates together with an intermediate shaft 32 serving as a rotational shaft that is rotatably supported. The intermediate shaft 32 may be called a second rotational shaft. The intermediate shaft 32 is rotatably supported by bearings 33 and 34 mounted to the gear housing 30A. The bearings 33 and 34 may be ball bearings. The output gear 35 rotates together with the output shaft 36 that is rotatably supported. The output shaft 36 may be called a third rotational shaft. The output shaft 36 may be rotatably supported by bearings 37 and 38 mounted within the gear housing 30A. The right end of the output shaft 36 may protrude into the interior of the blade case 15. At the right end of the output shaft 36, there is provided a holder 39 for holding the saw blade 14. The holder 39 may have an appropriate clamping structure for holding the saw blade 14. In this way, as the rotational drive force is generated by the electric motor 21, the output shaft 36 may receive the drive force reduced in two stages by the intermediate drive gear 31 and the output gear 35.

The bearing 37 and the bearing 38 for rotatably supporting the output shaft 36 may be disposed on the axially outer side and the axially inner side with respect to the electric motor 21, respectively, and therefore, the bearing 37 and the bearing 38 will be hereinafter also called an inner side supporting bearing 37 and an outer side supporting baring 38, respectively. The outer side supporting bearing 38 supports a portion of the output shafts 36 proximal to a portion where the saw blade 14 is mounted. The inner side supporting bearing 37 may be a needle bearing (needle-like runner). The outer side supporting bearing 38 may include two ball bearings 381 and 382. The two ball bearings 381 and 382 are arranged side by side so as to be adjacent to each other. In this way, the output shaft 36 is rotatably supported by three bearings, i.e., the inner side supporting bearing 37 that is a needle bearing, and the two ball bearings 381 and 382 forming the outer side supporting bearing 38. These three bearings 37, 381, and 382 are mounted within the gear housing 30A. The side where the saw blade 14 is mounted to the output shaft 36 and where the outer side supporting bearing 38 is arranged may be called one end side with respect to the output shaft 36. The opposite side where the inner side supporting bearing 37 may be called the other end side with respect to the output shaft 36. In this way, the output shaft 36 is rotatably supported by the inner side supporting bearing 37 and the outer side supporting bearing 38 (381, 382). Here, between the inner side supporting bearing 37 and the outer side supporting bearing 38, there is a difference in the axial bearing length contacting with the output shaft 36. That is, the axial length (indicated by numeral 380) along which the outer side supporting bearing 38 (381, 382) contacts the output shaft 36 is larger than the axial length (indicated by numeral 370) along which the inner side supporting bearing 37 contacts the output shaft 36. More specifically, the sum of the axial lengths (indicated by numeral 380) of the ball bearings 381 and 382 for contacting with the output shaft 36 is slightly larger than the axial length (indicated by numeral 370) of the inner side supporting bearing 37 for contacting with the output shaft 36. Because the inner side supporting bearing 37 is a needle bearing, the axial length (indicated by numeral 370) of the inner side supporting bearing 37 may be set to be slightly smaller than or substantially the same as the axial length (indicated by numeral 380) of the outer side supporting bearing 38 including the two ball bearings 381 and 382 arranged side by side.

The motor shaft 24, the intermediate shaft 32, and the output shaft 36 arranged in the gear housing 30A of the tool main body 13A may have the following positional relationship in the forward and rearward direction, in which the machining operation proceeds: That is, as shown in Fig. 7, a position (P1) of the motor shaft 24 in the forward and rearward direction is within the range of the hand-grasping space (indicated by numeral 50) of the handle portion 41A. Further, as shown in Fig. 7, a position (P3) of the output shaft 36 in the forward and rearward direction is also within the range of the hand-grasping space (indicated by numeral 50) of the handle portion 41A. Although the motor shaft 24 and the output shaft 36 are positioned at different positions (P1 and P3) in the vertical direction, their positions (P1 and P3) in the forward and rearward direction may coincide with each other. Therefore, the positions (P1 and P3) of the motor shaft 24 and the output shaft 36 in the forward and reward direction may be set such that the handle portion 41A is within the length of the tool main body 13A in the forward and rearward direction. Furthermore, the positions (P1 and P3) of the motor shaft 24 and the output shaft 36 in the forward and rearward direction may be set so as to be situated on the front side of the center-of-gravity position 600 of the battery pack 60 mounted to the battery mounting portion 43 as described in connection with the reference embodiment.

In contrast, a position (P2) of the intermediate shaft 32 in the forward and rearward direction may be situated on the front side of the positions (P1 and P3) of the motor shaft 24 and the output shaft 36. Further, as shown in Fig. 7, the position (P2) in the forward and rearward direction of the intermediate shaft 32 may be set so as to be situated on the front side of the hand-grasping space (indicated by numeral 50) of the handle portion 41A. Further, the position (P2) of the intermediate shaft 32 in the forward and rearward direction may be set so as to be situated on the rear side of the front end 52 of the non-slip covering portion 51 provided on the handle portion 41A. Furthermore, the position (P2) of the intermediate shaft 32 in the forward and rearward direction may be set at substantially the intermediate position between the positions (P1 and P3) of the motor shaft 24 and the output shaft 36 and the position of the front end 52 of the non-slip covering portion 51 provided on the handle portion 41A. The position of the intermediate shaft 32 in the vertical direction may be situated substantially at an intermediate position between the motor shaft 24 and the output shaft 36 in the vertical direction.

A controller 56 for performing various controls related to the rotation of the electric motor 21 may be disposed within the tool main body 13A. More specifically, the controller 56 may be retained within a controller retaining compartment 70. The controller retaining compartment 70 includes a left portion attached to a rear side surface of the left end portion of the gear housing 30A, and a right portion attached to a rear side surface of the motor housing 19. The motor housing 19 and the gear housing 30A are parts of the tool main body 13A, and therefore, the controller retaining compartment 70 also is a part of the tool main body 13A. The controller 56 may have a package having various electrical components contained therein and supported by a base member 57. The package may have a flat box shape, such as a flat rectangular box shape, having two opposite longer side surfaces (i.e., the most widely extending surfaces) and four or more shorter side surfaces connecting between the opposite longer side surfaces. The controller 56 inclusive of the base member 57 is supported within the controller retaining compartment 70. More specifically, the base member 57 of the controller 56 is mounted within the controller retaining compartment 70. The electrical components of the controller 56 may function to adjust the electric power supplied to the electric motor 21. The electrical components may include those serving as a regular control circuit for adjusting the electric power supplied to the electric motor 21 in a normal use, and may also include those serving as an auto stop (AS) control circuit for automatically turning off the power source under a predetermined condition. More specifically, the AS control circuit may perform control so as to forcibly turn off the electric power supplied to the electric motor 21 in the case where the battery pack 60 mounted to the battery mounting portion 43 has been over-discharged or where the electric motor 21 has been brought to an over-current state.

As shown in Fig. 10, the controller 56 is mounted within the controller retaining compartment 70 such that a front surface 56a of the controller 56 is situated on a radially outer side of the cooling fan 27. The interior of the controller retaining compartment 70 communicates within the motor housing 19 via an internal communication hole 71 formed in the rear side surface of the motor housing 19. The interior of the controller retaining compartment 70 may be opened to the outside via external communication holes 72 formed in the left and right side walls of the controller retaining compartment 70. Therefore, a portion of the flow of cooling air W produced by the cooling fan 27 may flow into the controller retaining compartment 70 via the internal communication hole 71. After cooling the controller 56, the air may be discharged to the outside of the controller retaining compartment 70 via the external communication holes 72. In this way, the controller 56 is arranged in the passage of the exhaust air flowing from the cooling fan 27 that cools the electric motor 21. Further, the controller 56 is positioned within the controller retaining compartment 70 (i.e, within the tool main body 13A) such that a thickness direction that is a direction of a shorter side (along the forward and rearward direction as viewed in Fig. 10) of the controller 56 extends in the machining proceeding direction (the forward and rearward direction). Further, this controller 56 is positioned on the rear side of the electric motor 21 in the machining proceeding direction, and is positioned on the front side of the battery mounting portion 43 in the machining proceeding direction.

With the cutting tool 11A according to the first embodiment, the positions of the motor shaft 24 and the output shaft 36 are set so as to be within the length of the handle portion 41A in the machining proceeding direction, so that it is possible to reduce the size of the cutting tool 11A in the machining proceeding direction and to achieve an improvement in terms of handling. Further, in the above-described cutting tool 11A, the positions of the motor shaft 24 and the output shaft 36 are situated on the front side in the machining proceeding direction of the center-of-gravity position 600 of the battery pack 60, while being within the length of the handle portion 41A in the machining proceeding direction, so that it is possible to improve the cutting tool 11A in terms of weight balance in forward and rearward direction along the machining proceeding direction. As a result, it is possible to achieve an enhancement in terms of ease of handling of the cutting tool 11A. Further, in the above-described cutting tool 11A, the position of the intermediate shaft 32 is situated on the front side of the positions of the motor shaft 24 and the output shaft 36 in the machining proceeding direction, and is situated on the rear side in the machining proceeding direction of the front end 52 of the non-slip covering portion 51 provided on the handle portion 41A, so that it is possible to further improve the cutting tool 11A in terms of balance in the forward and rearward direction along the machining proceeding direction.

Further, in the above-described cutting tool 11A, the controller retaining component 70 that is a part of the tool main body 13A is arranged such that the front surface 56a of the controller 56 is positioned on a radially outer side of the cooling fan 27. More specifically, the controller 56 is positioned on the outer peripheral side in the centrifugal direction with respect to the cooling fan 27 that is a centrifugal fan. As a result, it is possible to apply the exhaust air blown out by the cooling fan 27 to the front surface 56a of the controller 56, making it possible to achieve the effect of cooling the controller 56 with this exhaust air. Thus, it is possible to achieve a reduction in the size of the hand-held cutting tool 11A while securing the cooling the controller 56 by utilizing the cooling fan 27. Further, in the above-described cutting tool 11A, the controller 56 is arranged on the rear side of the electric motor 21 with respect to the machining proceeding direction, so that it is possible to achieve a reduction in size in the machining proceeding direction of the cutting tool 11A. As a result, it is possible for the cutting tool 11A to be one that allows easy machining operation. Further, in the above-described cutting tool 11A, the controller 56 is positioned such that its shorter side direction (i.e., the thickness direction) extends along the machining proceeding direction, so that it is possible to reduce the size in the machining proceeding direction of the space necessary for the controller 56. As a result, it is possible to reduce the size in the machining proceeding direction of the cutting tool 11A, making it possible for the cutting tool 11A to be one allowing easy machining operation.

Further, in the above-described cutting tool 11A, the output shaft 36 is supported by the three bearings 37, 381, and 382, so that, the output shaft 36 can be more stably supported as compared with the case where the output shaft is supported by two bearings. As a result, it is possible to achieve an improvement in terms of rotation support precision by bearings while achieving a reduction in the size of the cutting tool 11A. In particular, in the above embodiment, since the improvement in terms of rotation support precision is achieved by providing three bearings 37, 381 and 382, in other words, by increasing the number of bearings than in the conventional support structure incorporating two bearings, it is not necessary to increase the size of each bearing for improving the rotation support precision. Therefore, it is possible to improve the precision in the rotational support without accompanying an increase in size of the cutting tool 11A. Further, by using a needle baring as the bearing 37 that supports the axially inner end portion of the output shaft 36, it is possible to reduce the size of the bearing 37 in the radial direction of the output shaft 36. Further, in the above-described cutting tool 11A, the two ball bearings 381 and 382 are arranged side by side on the side of a portion of the output shaft 36 where the saw blade 14 is attached, so that it is possible to achieve an improvement in terms of rotation support, while the support being intensively made for the portion of the output shaft 36 where the saw blade 14 is attached. Further, in the above-described cutting tool 11A, in receiving the rotational drive force of the electric motor 21, the output shaft 36 is reduced in speed in two stages, so that it is possible to achieve an improvement in terms of rotation support precision while achieving an improvement in terms of torque due to speed reduction. Further, in the above-described cutting tool 11A, the axial length of the portion of the output shaft 36 contacting with the outer side supporting bearing 38 (381, 382) is set to be larger than the axial length of the portion of the output shaft 36 contacting with the inner side supporting bearing 37, so that it is possible to achieve an improvement in terms of rotation support precision, while the rotation support precision being improved primarily for the portion of the output shaft 36 where the saw blade 14 is attached.

### [Second Embodiment]

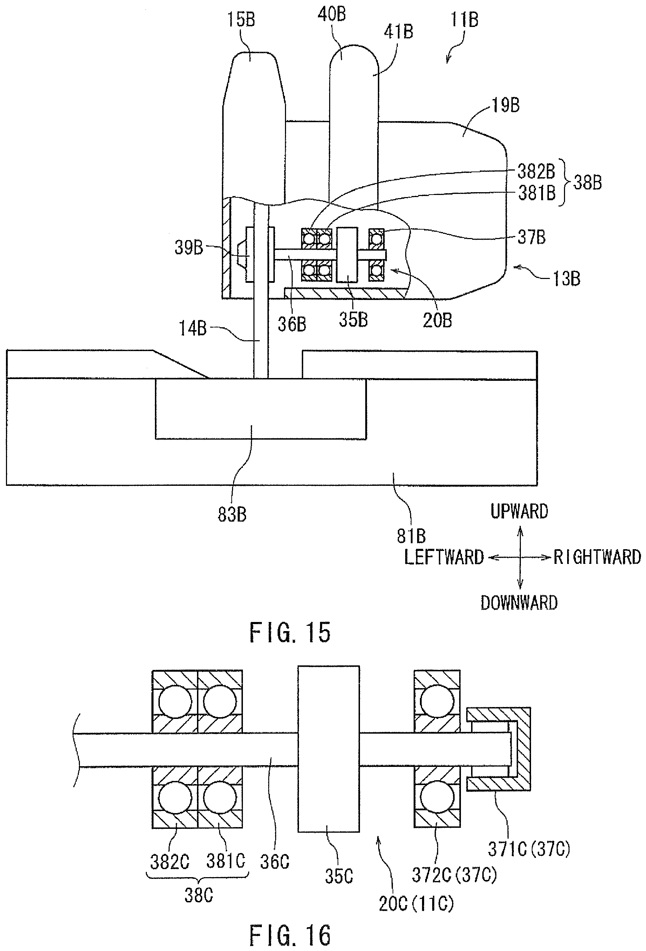

Next, a cutting tool 11B according to a second embodiment will be described with reference to Fig. 15. Fig. 15 schematically illustrates a part of a tool main body 13B of the cutting tool 11B according to the second embodiment. In particular, Fig. 15 schematically illustrates a support structure of an output shaft 36B.

In the description of the cutting tool 11B according to the second embodiment, the letter "A" at the end of the reference numerals used for the elements of the cutting tool according to the first embodiment is replaced by the letter "B" for some elements. The cutting tool 11B is a cutting tool (cutting machine) of a type generally referred to as a slide circular saw that is a variant of a table circular saw configured to perform a cutting operation through a vertical tilting movement of a tool main body. In the case of the slide circular saw, the cutting operation can be performed through a horizontal sliding movement of the tool main body in addition to the cutting operation through the vertical tilting movement of the tool main body. That is, although the cutting tool 11A according to the first embodiment described above is a hand-held cutting tool, the cutting tool 11B according to the second embodiment is a cutting tool configured to perform a cutting operation without being held by hand of the user and may be placed on the ground or on a bench (placing stand) for the cutting operation.

The cutting tool 11B may have a base 81B configured to be placed on the ground or on a bench, and a turntable 83B supported by the base 81B. A tool main body 13B may be supported on the upper side of the table 83B via a support mechanism (not shown). The support mechanism supports the tool main body 13B so as to allow a vertical tilting movement and a horizontal sliding movement of the tool main body 13B. Thus, the tool main body 13B may cut a workpiece as it is slid rearwardly in a state where the while it is lowered toward the table 83B. In Fig. 15, numeral 41B indicates a circular saw blade, numeral 15B indicates a blade case for covering substantially the upper half of the saw blade 41B, and numeral 41B indicates a handle portion to be grasped by the user. The handle portion includes a handle housing 40B.

On the right-hand side of the blade case 15B, there may be provided a drive section 20B of the tool main body 13B. This drive section 20B includes a motor housing 19B having an electric motor and a rotation transmission mechanism (not shown) disposed therein. The electric motor and the rotation transmission mechanism may be respectively configured to be the same as the electric motor 21 and the reduction gear section 30 of the first embodiment. Therefore, also in this embodiment, the electric motor serves as a rotational force generation device, and the motor shaft of the electric motor serves as a drive shaft. The rotation transmission mechanism couples between the motor shaft and the output shaft 36B. The rotation of the motor shaft may be transmitted to the outputs shaft 36B via the transmission mechanism. The saw blade 14B is attached to the output shaft 36B via a holder 39B that holds the saw blade 14B. An output gear 35B is mounted to the output shaft 36B. The output gear 35B is a part of the rotation transmission mechanism, so that the rotation of the electric motor is transmitted to the output shaft 36B via the output gear 35B of the rotation transmission mechanism after being reduced in the rotational speed.

The output shaft 36B may be rotatably supported by an inner side support bearing 37B and an outer side support bearing 38B disposed on the axially outer side and the axially inner side with respect to the electric motor, respectively. The inner side and outer side support bearings 37B and 38B may be mounted to ribs (not shown) formed within the motor housing 19B. Although the inner side supporting bearing 37 of the first embodiment is a needle bearing, the inner side supporting bearing 37 of the second embodiment is a ball bearing. Similar to the outer side support bearing 38 of the first embodiment, the outer side support bearing 38B may include two ball bearings 381B and 382B that are arranged side by side so as to be adjacent to each other. In this way, the output shaft 36B is rotatably supported by three bearings, i.e., the inner side supporting bearing 37B that is a ball bearing, and the two ball bearings 381B and 382B forming the outer side supporting bearing 38B.

Also in this embodiment, between the inner side supporting bearing 37B and the outer side supporting bearing 38B, there is a difference in the axial bearing length contacting with the output shaft 36B. In this embodiment, the inner side supporting bearing 37B and the bearings 381B, 382B of the outer side support bearing 38B have substantially the same length in the axial direction. Therefore, the axial length along which the outer side supporting bearing 38B (381B, 382B) contacts the output shaft 36B is substantially twice the axial length along which the inner side supporting bearing 37B contacts the output shaft 36B. Also with this arrangement, it is possible to improve the precision in the rotational support of the output shaft 36B, primarily for the portion of the output shaft 36B where the saw blade 14B is attached.

With the output shaft support structure in drive section 20B of second embodiment, it is possible to achieve substantially the same advantages as those of the output support structure in the drive section 20 of the first embodiment.

### [Third Embodiment]

Next, a cutting tool 11C according to a third embodiment will be described with reference to Fig. 16. The cutting tool 11C of this embodiment is a modification of the cutting tool 11B of the second embodiment. In particular, Fig. 16 schematically illustrates an arrangement of an inner side support bearing 37C and an outer side support bearing 38C. Thus, Fig. 16 shows a drive section 20C corresponding to the drive section 20B of the second embodiment. In other respect, the construction of the cutting tool 11C may be the same as the cutting tool 11B of the second embodiment. Therefore, the following description will be focused to the difference of the drive section 20C from the drive section 20B. In addition, for the elements similar to or the same as those of the drive section 20B, the letter "B" at the end of the reference numerals used for the elements of the drive section 20B according to the second embodiment described above is replaced by the letter "C".

The drive section 20C of the third embodiment is different from the second embodiment in the construction of the inner side support bearing 37B. Thus, although the second embodiment, the inner side support bearing 37B is a single bearing, the inner side support bearing 37B according to the second embodiment includes two bearings that may be a needle bearing and a ball bearing. More specifically, the inner side support bearing 37B includes a first inner side support bearing 371C and a second inner side support bearing 372C. The first inner side support bearing 371C may support the axially inner end (right end in Fig. 16) of the output shaft 36C and may be a needle bearing. The second inner side support bearing 372C may support the output shaft 36C at a position between the first inner side support bearing 371C and the output gear 35C. Mores specifically, the second inner side support bearing 372C is positioned on the axially outer side (let side in Fig. 16) of the first inner side support bearing 371C so as to be proximal thereto in the axial direction, while the second inner side support bearing 372C being spaced from the first inner side support bearing 371C by a little distance in the axial direction. The sum of the axial length along which the first inner side supporting bearing 371C contacts the output shaft 36C an the axial length along which the second inner side supporting bearing 372C contacts the output shaft 36C may be determined to be substantially the same as the axial length along which the outer side supporting bearing 38C (381C, 382C) contacts the output shaft 36C.

With the output shaft support structure in drive section 20C of the third embodiment, it is possible to achieve substantially the same advantages as those of the output support structure in the drive section 20 of the first embodiment or the drive section 20B of the second embodiment.

### [Possible Modifications]

The above embodiments may be modified in various ways. For example, in the first embodiment, the output shaft 36 is rotatably supported by the three bearings 37, 381, and 382. However, the output shaft 36 may be supported by four or five or more bearings. Further, in the first embodiment, the output shaft 36 is rotatably supported by the outer side supporting bearing 38 including the two ball bearings 381 and 382, and by the inner side supporting bearing 37 that is a single needle bearing. It is possible to select appropriate types of bearings for these bearings. For example, all the bearings may be ball bearings. However, it is desirable for the bearing on the side where the machining tool is mounted to be a ball bearing that is small in size. Regarding the number of bearings arranged, it is not necessarily that the number of bearings is relatively large on the side where the machining too is mounted. It may be possible that the number of bearings arranged is relatively large on the side opposite the side where the machining tool is mounted. Further, while in the above-described embodiments the rotational speed of the electric motor is reduced in two stages (e.g., by the intermediate drive gear 31 and the output gear 35), it is also possible to reduce the rotational speed in three, four or more stages.

Further, the controller of the first embodiment is configured to perform, in addition to a regular control, a so-called auto stop (AS) control, in which the electric motor is forcibly turned off in the over-discharge state or the over-current state. However, the controller may perform any other controls as long as they are related to the rotational drive of the electric motor.

Further, while a portable circular saw and a slide table saw have been described as examples of cutting tools, the present teachings may be also applicable to any other cutting tools, such as a chain saw, a disc grinder used to grind stone or the like, a trimmer for machining an end portion of a wooden workpiece or the like, and a router for grooving a wooden workpiece or the like. In addition, the present teachings may be also applicable any other power tools than the cutting tools.

Further, the electric motors that rotate with a supply of DC power have been described as rotational force generating devices in the above embodiments, the present teachings may be also applied to electric motors that rotate with a supply of AC power. In addition, the rotational force generating devices may not be limited to the electric motors as long as they can generate rotational forces from some kind of energies and have rotational drive shafts. For example, the rotational force generating devices may include pneumatic drive devices generating rotational forces from a compressed air, and internal and external combustion engines generating rotational forces from heat of fuel.

Further, although the reduction gear section is used as a rotation transmission mechanism in the above embodiments, the rotation of the rotational force generating device may be transmitted to the output shaft without being reduced in speed.

Further, the support structures incorporating the bearings (37, 381, 382: 37B, 381B, 381C; 371C, 372C, 381C, 382C) in the above embodiments are used for supporting the output shafts (36; 36B; 36C) serving as rotational driven shafts to which the rotation of the motor shafts (rotational drive shafts) is transmitted, the same or similar support structures can be also used for supporting the motor shafts (rotational drive shafts).

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A power tool (11A; 11B) comprising:
a rotational force generating device (21) having a rotational drive shaft (24); and
a rotational driven shaft (36; 36B; 36C) coupled to the rotational drive shaft (24) via a transmission mechanism (30), so that the rotation of the rotational drive shaft (24) is transmitted to the rotational driven shaft (36; 36B; 36C) via the transmission mechanism (30), the rotational driven shaft (36; 36B; 36C) being a separate member from the rotational drive shaft (24); **characterized in that**
the rotational driven shaft (36; 36B; 36C) is rotatably supported by at least three bearings (37, 381, 382; 37B, 381B, 382B; 371C, 372C, 381C, 382C),
the power tool further comprises a tool main body (13A; 13B) comprising a gear housing (30A) and a motor housing (19), wherein the rotational force generating device (21) is disposed in the motor housing (19) and the rotational driven shaft (36) is disposed in the gear housing (30A) and the at least three bearings (37, 381, 382) are mounted to the gear housing (30A), or comprising a motor housing (19B) and the rotational force generating device (21) and the rotational driven shaft (36B; 36C) are disposed in the motor housing (19B) and the at least three bearings (37B, 381B, 382B; 371C, 372C, 381C, 382C) are mounted to the motor housing (19B), and
the power tool further comprises a machining tool (14; 14B) for machining a workpiece, wherein the machining tool (14; 14B) is mounted to a mount portion of the rotational driven shaft (36; 36B; 36C), and two (381, 382; 381B, 382B; 381C, 382C) of the at least three bearings are arranged side by side on a side of a portion of the rotational driven shaft where the machining tool is attached.

2. The power tool (11A) according to claim 1, wherein the at least three bearings include a needle bearing (37; 371C) that supports an end portion of the rotational driven shaft (36; 36C).

3. The power tool (11A; 11B) according to claim 1 or 2, wherein the two bearings arranged side by side are ball bearings (381, 382; 381B, 382B; 381C, 382C).

4. The power tool (11A) according to claim 3, wherein the at least three bearings include a needle bearing (37; 371C) arranged on the side opposite to the mount portion.

5. The power tool (11B) according to claim 3, wherein the at least three bearings include a ball bearing (37B; 372C) arranged on the side opposite to the mount portion.

6. The power tool according to claim 3, wherein the at least three bearings include a ball bearing (372C) and a needle bearing (371C) arranged on the side opposite to the mount portion.

7. The power tool (11A; 11B) according to any one of claims 1 to 6, wherein:
the two bearings (381, 382; 381B, 382B; 381C, 382C) arranged side by side contact the rotational driven shaft (36; 36B; 36C) along a first length,
the at least three bearings include at least one bearing (37; 37B; 371C, 372C) arranged on the side opposite to the mount portion and contacting the rotational driven shaft (36; 36B; 36C) along a second length, and
the first length is longer than the second length.

8. The power tool (11A) according to any one of the preceding claims, wherein the transmission mechanism (30) is configured to reduce a rotational speed of the rotational drive shaft (24) in two stages.

9. The power tool according to any one of claims 1 to 8, wherein
the machining tool is a circular saw blade (14; 14B),
the at least three bearings (37, 381, 382; 37B, 381B, 382B; 371C, 372C, 381C, 382C) rotatably support the rotational driven shaft (36; 36B; 36C) with respect to the gear housing (30A) or the motor housing (19B);
the transmission mechanism includes an output gear (35; 35B; 35C) mounted to the rotational driven shaft (36; 36B; 36C), and
two of the at least three bearings are arranged on the side of the mount portion with respect to the output gear (35; 35B; 35C), and one of the at least three bearings is arranged on the side opposite of the mount portion with respect to the output gear.

10. The power tool according to any one of claims 1 to 9, wherein
the at least three bearings (37, 381, 382; 37B, 381B, 382B; 371C, 372C, 381C, 382C) rotatably support the rotational driven shaft (36; 36B; 36C) with respect to the gear housing (30A) or the motor housing (19B), and
the rotational driven shaft (36; 36B; 36C) is disposed on the lower side of the rotational drive shaft (24) and proximal to a bottom of the gear housing (30A) or a bottom of the motor housing (19B).

11. The power tool according to any one of claims 1 to 10, wherein
the power tool is a portable circular saw, and
the rotational drive shaft (24) extends parallel to the rotational driven shaft (36; 36B; 36C) in a rightward-leftward-direction which is perpendicular to a machining operation proceeding direction defining a forward-rearward-direction, and the positions (P1, P3) of the rotational drive shaft (24) and the rotational driven shaft (36; 36B; 36C) coincide in the forward-rearward-direction of the power tool.

12. The power tool according to any one of claims 1 to 11, wherein
the power tool is a portable circular saw,
the rotational drive shaft (24) and the rotational driven shaft (36) extend parallel to one another in a rightward-leftward-direction which is perpendicular to a machining operation proceeding direction,
the rotational drive shaft extends from a first end disposed in the gear housing (30A) to a second end disposed in the motor housing (19) that is disposed beyond the rotational driven shaft (36) in a direction away from a saw blade mounted on the rotational driven shaft (36) in the rightward-leftward-direction, and
the first end of the rotational drive shaft (24) is supported by a bearing (26) in the gear housing, wherein the bearing (26) is disposed above the bearing (37) supporting a left end of the rotational driven shaft (36).

## Patentansprüche

1. Kraftwerkzeug (11A; 11B), mit
einer Drehkrafterzeugungsvorrichtung (21), die eine Drehantriebswelle (24) aufweist, und
einer Drehabtriebswelle (36; 36B; 36C), die mit der Drehantriebswelle (24) über einen Übertragungsmechanismus (30) gekoppelt ist, so dass die Drehung der Drehantriebswelle (24) der Drehabtriebswelle (36; 36B; 36C) über den Übertragungsmechanismus (30) übertragen wird, bei dem die Drehabtriebswelle (36; 36B; 36C) ein separates von der Drehantriebswelle (24) ist, **dadurch gekennzeichnet, dass**
die Drehabtriebswelle (36; 36B; 36C) drehbar durch zumindest drei Lager (37, 381, 382; 37B, 381B, 382B; 371C, 372C, 381C, 382C) gelagert ist,
das Kraftwerkzeug ferner einen Werkzeughauptkörper (13A, 13B) aufweist, der ein Getriebegehäuse (30A) und ein Motorgehäuse (19) aufweist, bei dem die Drehkrafterzeugungsvorrichtung (21) in dem Motorgehäuse (19) angeordnet ist und die Drehabtriebswelle (36) in dem Getriebegehäuse (30A) angeordnet ist und die zumindest drei Lager (37, 381, 382) an dem Getriebegehäuse (30A) montiert sind, oder ein Motorgehäuse (19D) aufweist, und die Drehkrafterzeugungsvorrichtung (21) und die Drehabtriebswelle (36B, 36C) in dem Motorgehäuse (19B) angeordnet sind und die zumindest drei Lager (37B, 381B, 382B; 371C, 372C, 381C, 382C) an dem Motorgehäuse (19B) montiert sind, und
das Kraftwerkzeug ferner ein Bearbeitungswerkzeug (14; 14B) zum Bearbeiten eines Werkstückes aufweist, bei dem das Bearbeitungswerkzeug (14; 14B) an einen Montagebereich der Drehabtriebswelle (36; 36B; 36C) montiert ist, und zwei (381, 382; 381B, 382B; 381C, 382C) der zumindest drei Lager Seite an Seite auf einer Seite eines Bereiches der Drehabtriebswelle angeordnet sind, bei welchen das Bearbeitungswerkzeug angebracht ist.

2. Kraftwerkzeug (11A) nach Anspruch 1, bei dem die zumindest drei Lager ein Nadellager (37; 371C) aufweisen, dass einen Endbereich der Drehabtriebswelle (36; 36C) lagert.

3. Kraftwerkzeug (11A; 11B) nach Anspruch 1 oder 2, bei dem die zwei Lager, die Seite an Seite angeordnet sind, Kugellager (381, 382; 381B, 382B; 381C, 382C) sind.

4. Kraftwerkzeug (11A) nach Anspruch 3, bei dem die zumindest drei Lager ein Nadellader (37; 371C) aufweisen, das an der entgegengesetzten Seite zu dem Montagebereich angeordnet ist.

5. Kraftwerkzeug (11B) nach Anspruch 3, bei dem die zumindest drei Lager ein Kugellager (37B; 372C) aufweisen, das auf der entgegengesetzten Seite des Montagebereichs angeordnet ist.

6. Kraftwerkzeug nach Anspruch 3, bei dem die zumindest drei Lager ein Kugellager (372C) und Nadellager (371C) aufweisen, die auf der entgegengesetzten Seite des Montagebereiches angeordnet sind.

7. Kraftwerkzeug (11A; 11B) nach einem der Ansprüche 1 bis 6, bei dem
die zwei Lager (381, 382; 381B, 382B; 381C, 382C), die Seite an Seite angeordnet sind, die Drehabtriebswelle (36; 36B; 36C) entlang einer ersten Länge berühren,
die zumindest drei Lager zumindest ein Lager (37; 37B; 371C, 372C) aufweisen, das auf der entgegengesetzten Seite des Montagebereiches angeordnet ist und die Drehabtriebswelle (36; 36B; 36C) entlang einer zweiten Länge berührt, und
die erste Länge länger als die zweite Länge ist.

8. Kraftwerkzeug (11A) nach einem der vorhergehenden Ansprüche, bei dem der Übertragungsmechanismus (30) dazu konfiguriert ist, eine Drehzahl der Drehantriebswelle (24) in zwei Stufen zu reduzieren.

9. Kraftwerkzeug nach einem der Ansprüche 1 bis 8, bei dem
das Bearbeitungswerkzeug ein Kreissägeblatt (14; 14B) ist,
die zumindest drei Lager (37, 381, 382; 37B, 381B, 382B; 371C, 372C, 381C, 382C) drehbar die Drehabtriebswelle (36; 36B; 36C) in Bezug auf das Getriebegehäuse (30A) oder das Motorgehäuse (19B) lagern,
der Übertragungsmechanismus ein Ausgabezahnrad (35; 35B; 35C) aufweist, das an die Drehabtriebswelle (36; 36B; 36C) montiert ist, und
zwei der zumindest drei Lager auf der Seite des Montagebereiches in Bezug auf das Ausgabezahnrad (35; 35B; 35C) angeordnet sind, und eines der zumindest drei Lager auf der Seite entgegengesetzt zu dem Montagebereich in Bezug auf das Ausgabezahnrad angeordnet ist.

10. Kraftwerkzeug nach einem der Ansprüche 1 bis 9, bei dem
die zumindest drei Lager (37, 381, 382; 37B, 381B, 382B; 371C, 372C, 381C, 382C) drehbar die Drehabtriebswelle (36; 36B; 36C) in Bezug auf das Getriebegehäuse (30A) oder das Motorgehäuse (19B) lagern, und
die Drehabtriebswelle (36; 36B; 36C) an der unteren Seite der Drehantriebswelle (24) und proximal zu einem Boden des Getriebegehäuses (30A) oder einem Boden des Motorgehäuses (19B) angeordnet ist.

11. Kraftwerkzeug nach einem der Ansprüche 1 bis 10, bei dem
das Kraftwerkzeug eine tragbare Kreissäge ist, und
die Drehantriebsseite (24) sich parallel zu der Drehabtriebswelle (36; 36B; 36C) in einer Rechts-Links-Richtung erstreckt, welche senkrecht zu einer Bearbeitungsvorgangvorrückrichtung ist, die eine Vorwärts-Rückwärts-Richtung definiert, und die Positionen (P1, P3) der Drehantriebswelle (24) und der Drehabtriebswelle (36; 36B; 36C) in der Vorwärts-Rückwärts-Richtung des Kraftwerkzeuges zusammenfallen.

12. Kraftwerkzeug nach einem der Ansprüche 1 bis 11, bei dem
das Kraftwerkzeug eine tragbare Kreissäge ist,
die Drehantriebswelle (24) und die Drehabtriebswelle (36) sich parallel zueinander in einer Rechts-Links-Richtung erstrecken, welche senkrecht zu einer Bearbeitungsvorgangsvorrückrichtung ist,
die Drehantriebswelle sich von einem ersten Ende, das in dem Getriebegehäuse (30A) angeordnet ist, zu einem zweiten Ende erstreckt, das in dem Motorgehäuse (19) angeordnet ist, das über die Drehabtriebswelle (36) in einer Richtung weg von einem Sägeblatt angeordnet ist, das an der Drehabtriebswelle (36) in der Rechts-Links-Richtung montiert ist, und
das erste Ende der Antriebswelle (24) durch ein Lager (26) in dem Getriebegehäuse gelagert wird, bei dem das Lager (26) oberhalb des Lagers (37) angeordnet ist, das ein linkes Ende der Drehabtriebswelle (36) lagert.

## Revendications

1. Outil électrique (11A ; 11B) comprenant :
un dispositif de génération de force de rotation (21) ayant un arbre d'entraînement en rotation (24) ; et
un arbre entraîné en rotation (36 ; 36B ; 36C) couplé à l'arbre d'entraînement en rotation (24) via un mécanisme de transmission (30), de sorte que la rotation de l'arbre d'entraînement en rotation (24) est transmise à l'arbre entraîné en rotation (36 ; 36B ; 36C) via le mécanisme de transmission (30), l'arbre entraîné en rotation (36 ; 36B ; 36C) étant un élément séparé de l'arbre d'entraînement en rotation (24) ; **caractérisé en ce que**
l'arbre entraîné en rotation (36 ; 36B ; 36C) est supporté en rotation par au moins trois paliers (37, 381, 382 ; 37B, 381B, 382B ; 371C, 372C, 381C, 382C),
l'outil électrique comprend en outre un corps principal d'outil (13A; 13B) comprenant un logement d'engrenages (30A) et un logement de moteur (19), dans lequel le dispositif de génération de force de rotation (21) est disposé dans le logement de moteur (19) et l'arbre entraîné en rotation (36) est disposé dans le logement d'engrenages (30A) et lesdits au moins trois paliers (37, 381, 382) sont montés sur le logement d'engrenages (30A), ou comprenant un logement de moteur (19B) et le dispositif de génération de force de rotation (21) et l'arbre entraîné en rotation (36B ; 36C) sont disposés dans le logement de moteur (19B) et lesdits au moins trois paliers (37B, 381B, 382B ; 371C, 372C, 381C, 382C) sont montés sur le logement de moteur (19B), et
l'outil électrique comprend en outre un outil d'usinage (14 ; 14B) pour usiner une pièce à usiner, dans lequel l'outil d'usinage (14 ; 14B) est monté sur une partie de montage de l'arbre entraîné en rotation (36 ; 36B ; 36C), et deux (381, 382 ; 381B, 382B ; 381C, 382C) desdits au moins trois paliers sont disposés côte à côte sur un côté d'une partie de l'arbre entraîné en rotation où l'outil d'usinage est fixé.

2. Outil électrique (11A) selon la revendication 1, dans lequel lesdits au moins trois paliers comprennent un palier à aiguilles (37 ; 371C) qui supporte une partie d'extrémité de l'arbre entraîné en rotation (36 ; 36C).

3. Outil électrique (11A ; 11B) selon la revendication 1 ou 2, dans lequel les deux paliers disposés côte à côte sont des paliers à billes (381, 382 ; 381B, 382B ; 381C, 382C).

4. Outil électrique (11 A) selon la revendication 3, dans lequel lesdits au moins trois paliers comprennent un palier à aiguilles (37 ; 371C) disposé sur le côté opposé à la partie de montage.

5. Outil électrique (11B) selon la revendication 3, dans lequel lesdits au moins trois paliers comprennent un palier à billes (37B ; 372C) disposé sur le côté opposé à la partie de montage.

6. Outil électrique selon la revendication 3, dans lequel lesdits au moins trois paliers comprennent un palier à billes (372C) et un palier à aiguilles (371C) disposés sur le côté opposé à la partie de montage.

7. Outil électrique (11A ; 11B) selon l'une quelconque des revendications 1 à 6, dans lequel :
les deux paliers (381, 382 ; 381B, 382B ; 381C, 382C) disposés côte à côte sont en contact avec l'arbre entraîné en rotation (36 ; 36B ; 36C) sur une première longueur,
lesdits au moins trois paliers comprennent au moins un palier (37 ; 37B ; 371C, 372C) disposé sur le côté opposé à la partie de montage et en contact avec l'arbre entraîné en rotation (36 ; 36B ; 36C) le long d'une seconde longueur, et
la première longueur est plus longue que la seconde longueur.

8. Outil électrique (11A) selon l'une quelconque des revendications précédentes, dans lequel le mécanisme de transmission (30) est configuré pour réduire une vitesse de rotation de l'arbre d'entraînement en rotation (24) en deux étapes.

9. Outil électrique selon l'une quelconque des revendications 1 à 8, dans lequel :
l'outil d'usinage est une lame de scie circulaire (14 ; 14B),
lesdits au moins trois paliers (37, 381, 382 ; 37B, 381B, 382B ; 371C, 372C, 381C, 382C) supportent de manière rotative l'arbre entraîné en rotation (36 ; 36B ; 36C) par rapport au logement d'engrenages (30A) ou au logement de moteur (19B) ;
le mécanisme de transmission comprend un engrenage de sortie (35 ; 35B ; 35C) monté sur l'arbre entraîné en rotation (36 ; 36B ; 36C), et
deux desdits au moins trois paliers sont disposés sur le côté de la partie de montage par rapport à l'engrenage de sortie (35 ; 35B ; 35C), et l'un desdits au moins trois paliers est disposé sur le côté opposé à la partie de montage par rapport à l'engrenage de sortie.

10. Outil électrique selon l'une quelconque des revendications 1 à 9, dans lequel
lesdits au moins trois paliers (37, 381, 382 ; 37B, 381B, 382B ; 371C, 372C, 381C, 382C) supportent de manière rotative l'arbre entraîné en rotation (36 ; 36B ; 36C) par rapport au logement d'engrenages (30A) ou au logement de moteur (19B), et
l'arbre entraîné en rotation (36 ; 36B ; 36C) est disposé sur le côté inférieur de l'arbre d'entraînement en rotation (24) et à proximité d'un fond du logement d'engrenages (30A) ou d'un fond du logement de moteur (19B).

11. Outil électrique selon l'une quelconque des revendications 1 à 10, dans lequel
l'outil électrique est une scie circulaire portable, et
l'arbre d'entraînement en rotation (24) s'étend parallèlement à l'arbre entraîné en rotation (36 ; 36B ; 36C) dans une direction droite-gauche qui est perpendiculaire à une direction de déroulement d'opération d'usinage définissant une direction avant-arrière, et les positions (P1, P3) de l'arbre d'entraînement en rotation (24) et de l'arbre entraîné en rotation (36 ; 36B ; 36C) coïncident dans la direction avant-arrière de l'outil électrique.

12. Outil électrique selon l'une quelconque des revendications 1 à 11, dans lequel
l'outil électrique est une scie circulaire portable,
l'arbre d'entraînement en rotation (24) et l'arbre entraîné en rotation (36) s'étendent parallèlement l'un à l'autre dans une direction droite-gauche qui est perpendiculaire à une direction de déroulement d'opération d'usinage,
l'arbre d'entraînement en rotation s'étend d'une première extrémité disposée dans le logement d'engrenages (30A) à une seconde extrémité disposée dans le logement de moteur (19) qui est disposé au-delà de l'arbre entraîné en rotation (36) dans une direction éloignée d'une lame de scie montée sur l'arbre entraîné en rotation (36) dans la direction droite-gauche, et
la première extrémité de l'arbre d'entraînement en rotation (24) est supportée par un palier (26) dans le logement d'engrenages, dans lequel le palier (26) est disposé au-dessus du palier (37) supportant une extrémité gauche de l'arbre entraîné en rotation (36).
